(19)

**Europäisches Patentamt**
**European Patent Office**
**Office européen des brevets**

(11) **EP 4 507 107 B1**

(12) **EUROPEAN PATENT SPECIFICATION**

(45) Date of publication and mention
of the grant of the patent:
**11.03.2026 Bulletin 2026/11**

(21) Application number: **24793963.0**

(22) Date of filing: **03.04.2024**

(51) International Patent Classification (IPC):
*H01M 50/403* (2021.01)   *H01M 50/414* (2021.01)
*H01M 50/42* (2021.01)   *H01M 50/426* (2021.01)
*H01M 50/431* (2021.01)   *H01M 50/434* (2021.01)
*H01M 50/443* (2021.01)   *H01M 50/446* (2021.01)
*H01M 50/449* (2021.01)   *H01M 50/451* (2021.01)
*H01M 50/457* (2021.01)   *H01M 50/489* (2021.01)
*H01M 10/0525* (2010.01)

(52) Cooperative Patent Classification (CPC):
**H01M 50/489; H01M 10/0525; H01M 50/403;**
**H01M 50/414; H01M 50/42; H01M 50/426;**
**H01M 50/431; H01M 50/434; H01M 50/443;**
**H01M 50/446; H01M 50/449; H01M 50/451;**
**H01M 50/457; Y02E 60/10**

(86) International application number:
**PCT/CN2024/075249**

(87) International publication number:
**WO 2024/255270 (19.12.2024 Gazette 2024/51)**

(54) **BATTERY SEPARATOR AND PREPARATION METHOD THEREFOR, AND BATTERY**

BATTERIESEPARATOR UND HERSTELLUNGSVERFAHREN DAFÜR SOWIE BATTERIE

SÉPARATEUR DE BATTERIE ET SON PROCÉDÉ DE PRÉPARATION, ET BATTERIE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **15.06.2023 CN 202310711408**

(43) Date of publication of application:
**12.02.2025 Bulletin 2025/07**

(73) Proprietor: **Sinoma Lithium Battery Separator**
**Co., Ltd.**
**Zaozhuang, Shandong 277500 (CN)**

(72) Inventors:
• **LIU, Gaojun**
**Shandong 277500 (CN)**
• **TANG, Xiao**
**Shandong 277500 (CN)**
• **GAO, Feifei**
**Shandong 277500 (CN)**
• **QIN, Wenjuan**
**Shandong 277500 (CN)**

• **BAI, Lin**
**Shandong 277500 (CN)**
• **SUN, Jing**
**Shandong 277500 (CN)**
• **XU, Meng**
**Shandong 277500 (CN)**
• **ZHENG, Lei**
**Shandong 277500 (CN)**
• **BAI, Yaozong**
**Shandong 277500 (CN)**
• **CHU, Zhuxin**
**Shandong 277500 (CN)**

(74) Representative: **Staeger & Sperling**
**Partnerschaftsgesellschaft mbB**
**Sonnenstraße 19**
**80331 München (DE)**

(56) References cited:
**EP-A1- 3 866 244      EP-A1- 4 099 495**
**EP-A1- 4 102 636      CN-A- 104 064 709**
**CN-A- 107 895 766    CN-A- 113 161 692**
**CN-A- 113 629 357    CN-A- 114 709 563**

**(Cont. next page)**

CN-A- 115 117 559    CN-A- 115 528 380
CN-A- 116 454 542    US-A1- 2014 377 630

**Description**

**TECHNICAL FIELD**

The present application relates to the field of batteries and, more particularly, to a battery separator and preparation method therefor, and a battery comprising the battery separator.

**BACKGROUND**

With the development of lithium-ion battery technology, there are more and more requirements for the separator. Therefore, the development of the separator is no longer limited to the base film, and the functionality of the coating has been paid more and more attention. For instance, coating modification requires bonding property, heat resistance, electrolyte affinity, and the like of the coating, which provides a technical route for the development of the separator.

The prior art is mostly through the selection of PVDF as the bonding layer, in which PVDF itself, a material with certain bonding property, can be used as a binder for the positive electrode in the battery. According to the current market development, spray coating is mostly carried out to attach PVDF to the surface of ceramic separator to achieve the bonding function.

However, because of the high melting point of PVDF ($\geq 135°C$), the conditions for achieving its bonding property will be more strict, requiring higher temperature and pressure to achieve the adhesion of the separator and the electrode sheets. In addition, since molding particle size of PVDF per se is small, only through agglomeration to form a certain size of agglomerates, a significant bonding effect can be achieved. Because the agglomerates are formed at a later stage, and it is impossible to control the particle size of the agglomerates, the size and morphology of the agglomerates are very different. Therefore, the consistency and stability of the PVDF are very weak, which means that, when PVDF is selected as the bonding layer, the structure is not stable, and is prone to powder falling off, which affects the bonding effect. Moreover, it is difficult to ensure the consistency of the coating, and both the stack density and the morphology of the agglomerates on the coating have obvious differences, making it difficult to control the fraction of coverage, so that the coating cannot be controlled in both micro and macro levels.

US 2014/377630 A1 discloses a laminated porous film having a layer containing a polymer other than a polyolefin laminated on at least one surface of a polyolefin porous film.

CN 107 895 766 A discloses a battery separator coated with a high-temperature-resistant coating, comprising a separator and a high-temperature-resistant coating applied to the surface of the separator.

**SUMMARY**

The invention is set out in the appended set of claims.

In view of the above problems, the present application, by using ceramic particles and fluorine-free polymer resin particles for mixing and blending, comprehensively considering and adjusting the coating surface density, ceramic particle size, fluorine-free polymer resin particle size, ceramic thickness and other factors, ultimately provides a coating with good bonding property, high consistency, high stability, and good heat-resistant.

Specifically, the present application provides a battery separator having a coating with good bonding property, high consistency, good stability, and good heat resistance, a preparation method therefor, and a battery including the battery separator.

The present application provides a battery separator comprising a base film and a coating coated on one or both sides of the base film, wherein

the coating contains: fluorine-free polymer resin particles and ceramic particles;

wherein the fluorine-free polymer resin particles have a primary particle morphology or a secondary agglomerate morphology, and the fluorine-free polymer resin particles are in spherical form and dispersed within the ceramic particles,

a coating surface density $\rho_0$, a coating thickness $h_o$, an average radius r of fluorine-free polymer resin particles, a volume $V_1$ occupied by fluorine-free polymer resin particles in the coating, a number $N_0$ of fluorine-free polymer resin particles, a density $\rho$ of fluorine-free polymer resin, and a coating density $\rho_1$ of pure ceramic coating satisfy the following relationship:

$$\frac{4\pi r^3}{3} \times \rho \times N_0 + (h_0 - V_1 \times N_0) \times \rho_1 = \rho_0$$

$$0.8\rho_1 \leq \rho_0/h_0 \leq 1.2\rho_1;$$

the fluorine-free polymer resin has a glass transition temperature of 40°C to 100°C and a swelling rate of 10% to 200%;

$N_0$ is the number of fluorine-free polymer resin particles comprised in a 1 $m^2$ separator, which is obtained by first counting a number of fluorine-free polymer resin particles under 1K electron microscopy and then converting counted number according to area;

the density $\rho$ is measured using the raw material of fluorine-free polymer resin or the fluorine-free polymer resin particles that are separated from the coating and then collected, and the density $\rho$ is measured with an electronic scale and a graduated cylinder;

the coating density $\rho_1$ is obtained by using the ceramic particles, coating with a gravure roller or a wire rod to form a film, and measuring the surface density of the film with an electronic scale and a steel straightedge; and

the coating surface density $\rho_0$ is calculated by the above equation.

The present application also provides a preparation method for the battery separator, for achieving the preparation of the battery separator provided by the present application. However, achieving the battery separator provided by the present application is not limited to the preparation method provided by the present application. The method comprises:

1) dispersing a ceramic powder in water, and sanding and dispersing by a sand mill to form a dispersion;

2) adding a fluorine-free polymer resin liquid in emulsion form to the dispersion, adding a binder, and passing through an 80 mesh to 200 mesh sieve to form a finished slurry; and

3) according to the requirements of a desired coating thickness, coating the finished slurry on one or both sides of a base film using a gravure roller or a wire rod, and after the finished slurry is coated onto surface(s) of the base film, drying with an oven to obtain a battery separator with coating;

wherein, in step 1), a rotational speed of the sanding and dispersing is 500 rpm to 1500 rpm, and a time of the sanding and dispersing is 10 min to 60 min; after the end of step 1), the dispersion is cooled under low-speed stirring to maintain a temperature of the dispersion at $\leq$ 70°C, wherein a stirring speed of the low-speed stirring is 20 rpm to 300 rpm;

the finished slurry obtained in step 2) is continuously stirred at a low speed from the completion of configuration until being put into use, so that the finished slurry is always in dynamic equilibrium, and a rotational speed of the low-speed stirring is 10 rpm to 800 rpm; from the beginning of step 2) until the finished slurry is put into use, the slurry is maintained at a temperature of 5°C to 70°C; the low-speed stirring is carried out using a stirring tank with stirring blades in both upper and lower parts, and radii of the stirring blades in the upper and lower parts are not the same; and

in step 3), in the battery separator, a coating surface density $\rho_0$, a coating thickness $h_0$, an average radius r of fluorine-free polymer resin particles, a volume $V_1$ occupied by fluorine-free polymer resin particles in the coating, a number $N_0$ of fluorine-free polymer resin particles, a density $\rho$ of fluorine-free polymer resin, and a coating density $\rho_1$ of pure ceramic coating satisfy the following relationship:

$$\frac{4\pi r^3}{3} \times \rho \times N_0 + (h_0 - V_1 \times N_0) \times \rho_1 = \rho_0$$

$$0.8\rho_1 \leq \rho_0/h_0 \leq 1.2\rho_1;$$

the fluorine-free polymer resin has a glass transition temperature of 40°C to 100°C and a swelling rate of 10% to 200%;

$N_0$ is the number of fluorine-free polymer resin particles comprised in a 1 m$^2$ separator, which is obtained by first counting a number of fluorine-free polymer resin particles under 1K electron microscopy and then converting counted number according to area;

the density $\rho$ is measured using the raw material of fluorine-free polymer resin or the fluorine-free polymer resin particles that are separated from the coating and then collected, and the density $\rho$ is measured with an electronic scale and a graduated cylinder;

the coating density $\rho_1$ is obtained by using the ceramic particles, coating with a gravure roller or a wire rod to form a film, and measuring the surface density of the film with an electronic scale and a steel straightedge; and

the coating surface density $\rho_0$ is calculated by the above equation.

Preferably, in the coating of step 3), high-speed coating is used, and a speed of the high-speed coating is 50 m/min to 250 m/min; and a temperature of the drying is 50°C to 100°C, preferably 60°C to 90°C; and a time of the drying is $\geq$ 5 s.

The present application also provides a battery comprising: a positive electrode, a negative electrode, a separator disposed between the positive electrode and the negative electrode, and an electrolyte, wherein the separator is the battery separator provided by the present application.

The technical solution provided by the present application can achieve a coated separator with good bonding property, good consistency, good stability and good heat resistance, and can achieve a balance of the four performances. The coated surface of the separator has good bonding property, and is firmly adhered to the electrode sheet, which is favorable to the assembly of the battery cell and the improvement of the energy density of the battery. The coated surface has a high consistency of ceramic stacking thickness, which in turn improves the consistency of the battery cell performance and increases the cycle life of the battery. Resin particles should be stably fixed on the coating, and if the resin particles detach, it will affect the battery cell assembly and battery cycle life. The good heat shrinkage performance of the separator is conducive to improving the safety of the battery. However, the inventor found that in the prior art, it is often difficult to balance these four performances. For example, the enhancement of the coating bonding property will lead to the reduction of the coating stability performance and heat resistance performance, and will also lead to the deterioration of the coating consistency. Therefore, the present application provides a solution for battery separator, which achieves the compatibility and balance of the four performances by controlling the parameters of the coating in multiple aspects, so as to enhance the quality and efficiency of the back-end battery cell assembly, to improve the energy density and cycle life of the battery, and to benefit the safety of the battery. The present application also provides one of the preparation methods for such a separator.

**BRIEF DESCRIPTION OF THE DRAWINGS**

FIG. 1 shows a schematic diagram of a coating structure of a battery separator provided by an example of the present application.

FIG. 2 shows a planar SEM image of the coated film of the battery separator of Example 1 of the present application.

DETAILED DESCRIPTION

The present application provides a battery separator comprising a base film and a coating coated on one or both sides of the base film, wherein

the coating comprises: fluorine-free polymer resin particles and ceramic particles;

wherein the fluorine-free polymer resin particles have a primary particle morphology or a secondary agglomerate morphology, and the fluorine-free polymer resin particles are in spherical form and dispersed within the ceramic particles,

a coating surface density $\rho_0$, a coating thickness $h_0$, an average radius r of fluorine-free polymer resin particles, a

volume $V_1$ occupied by fluorine-free polymer resin particles in the coating, a number $N_0$ of fluorine-free polymer resin particles, a density $\rho$ of fluorine-free polymer resin, and a coating density $\rho_1$ of pure ceramic coating satisfy the following relationship:

$$\frac{4\pi r^3}{3} \times \rho \times N_0 + (h_0 - V_1 \times N_0) \times \rho_1 = \rho_0$$

$$0.8\rho_1 \leq \rho_0/h_0 \leq 1.2\rho_1.$$

In the above relationship equation, $V_1$ denotes a spherical cap volume (i.e., the volume occupied by the fluorine-free polymer resin particles in the coating), and $N_0$ denotes the number of fluorine-free polymer resin particles.

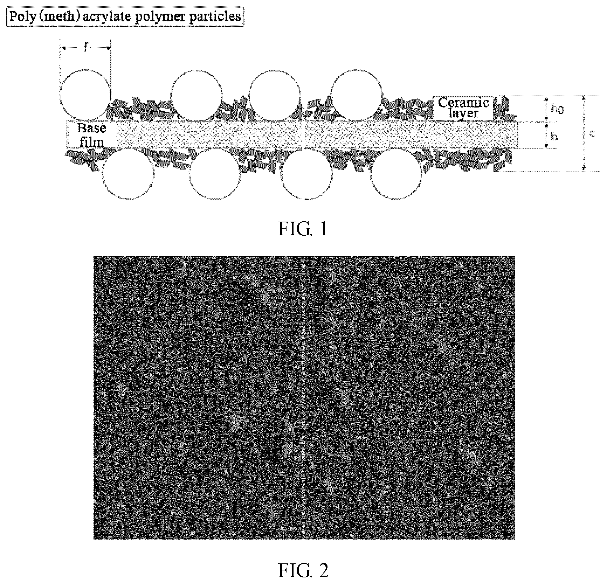

As shown in FIG. 1, the coating is disposed on both sides of the base film, then the coating thickness $h_0$ = (c-b)/2; or, if the coating is disposed on a single side of the base film, then the coating thickness $h_0$ is the difference between the thickness of the battery separator and the thickness of the base film. In particular, the value of $h_0$ can be determined by the following method: preparing a cross-sectional sample of the battery separator at 21°C $\pm$ 4°C and humidity $\leq$ 65% RH, and obtaining a cross-sectional electron micrograph by capturing with an electron microscope of Zeiss SIGMA 300 model. On the picture, the thicknesses at any five positions of the ceramic stacking layer within the single coating were measured, and the average value was taken as the value of $h_0$.

The spherical cap volume $V_1 = (\pi/3)(3r-h) \times h^2$, with h being the height of the spherical cap and $h = h_0$, where it is noted that 2r=D=D50, wherein r is the radius of the sphere of the fluorine-free polymer resin particles, D is the diameter, D-h0>0, and D50 depends on the selection of the raw material of the fluorine-free polymer resin. In particular, the value of D50 can be determined from the raw material, or it can be determined by taking any 5 samples of fluorine-free polymer resin particles using the aforementioned electron microscopy method and converting to the average value.

$\rho$ and $\rho_1$ are fixed values determined by the fluorine-free polymer resin and the ceramic material. Specifically, p is determined by the nature of the raw material, and $\rho_1$ is determined by the density and particle size of the ceramic. $\rho$ can be measured with the raw material of fluorine-free polymer resin. Alternatively, the fluorine-free polymer resin particles can be separated from the coating and then collected, and p can be measured with an electronic scale and a graduated cylinder.

$\rho_1$ can be obtained by using ceramic particles, coating with a gravure roller or a wire rod to form a film, and measuring the surface density of the film with an electronic scale and a steel straightedge. The ceramic particles used are ceramic particles used as the raw material for the coating, or ceramic particles extracted from the separator coating. The method of extracting the ceramic particles from the separator is not particularly limited. For example, the coating or separator can be dissolved in a solvent to extract the ceramic particles. Specifically: in a first step, the ceramic particles are dispersed into water to make a common ceramic slurry; in a second step, the ceramic slurry is coated into a film using a gravure roller or a wire rod of a corresponding dry thickness; and in a third step, the density of the coating surface is measured by an electronic scale and a steel straightedge to obtain $\rho_1$.

$\rho_0$ is the surface density of the coating, which is calculated by the above equation.

Regarding $N_0$, it is sufficient to count the number of fluorine-free polymer resin particles within the field of view area of the electron microscope at 1000x magnification, and then convert it to the number of fluorine-free polymer resin particles in 1 $m^2$ separator based on the field of view area of the electron microscope (for example, using the aforementioned electron microscope method, count the average value of the number of fluorine-free polymer resin particles in 5 electron microscope pictures at 1000x magnification, calculate the area of the field of view of the electron microscope at that magnification, and then convert to the number of fluorine-free polymer resin particles per unit area by the unit, i.e., the number $N_0$ of particles on an area of 1 $m^2$).

The coating surface density $\rho_0$ is 0 $g/m^2$ to 20 $g/m^2$, the coating thickness $h_0$ is $0.1 \times 10^{-6}$ to $10 \times 10^{-6}$, the average radius r of fluorine-free polymer resin particles is $1 \times 10^{-6}$ m to $4.5 \times 10^{-6}$ m, the volume $V_1$ occupied by fluorine-free polymer resin particles in the coating is $\geq 0$ $m^3$, the number $N_0$ of fluorine-free polymer resin particles is $\geq 1$ (being an integer), the density p of fluorine-free polymer resin is $0.5 \times 10^6$ $g/m^3$ to $2.0 \times 10^6$ $g/m^3$, and the coating density $\rho_1$ of pure ceramic coating is $0.5 \times 10^6$ $g/m^3$ to $2.0 \times 10^6$ $g/m^3$.

It should be noted that $p_0$, $h_0$, r, $V_1$, $N_0$, $\rho$, and $\rho_1$ should be calculated without considering the unit when substituting them into the relational equation, and that the relational equation and ranges presented in the present application are designed based on the numerical relationships of these parameters, independent of the equivalence of the dimensions.

The fluorine-free polymer resin particles are in spherical form, and the spherical form has excellent structural stability and higher consistency in the coating. The degree of sphericity can be characterized by the method of length-diameter ratio, i.e., the length-diameter ratio S=the longest diameter passing through the interior of the particle/the shortest diameter perpendicular to the longest diameter, and S $\leq$ 2 indicates that the particles are in spherical form.

The primary particle morphology may be a primary particle morphology in which the inner and outer components are consistent, or a primary particle morphology in which a core-shell structure is present.

The fluorine-free polymer resin has a certain degree of cross-linking and has a low glass transition temperature (Tg), preferably 40°C to 100°C. Too low Tg will lead to structural instability, and making it prone to structural disintegration or sphere collapse and deformation; and too high Tg will lead to a decrease in sphere bonding property, and making it prone to defects of battery cell softness.

The fluorine-free polymer resin has a certain swelling property, and the swelling rate is preferably 10% to 200%, more preferably 10% to 100%. As a polymer material, a swelling rate that is too small affects the ability of the battery cell to retain liquid; a swelling rate that is too large will likely lead to defects such as high value-added permeability and thickness expansion of the electrode sheet after immersion in the electrolyte, which affects the cycling performance of the battery, and even the loss of bonding property after electrolyte immersion.

The fluorine-free polymer resin preferably has a glass transition temperature of 45°C to 70°C and a swelling rate of 10% to 100%.

Preferably, the fluorine-free polymer resin is at least one selected from a poly(meth)acrylate polymer, SBR (styrene butadiene rubber) microspheres, PI (polyimide) water-soluble microspheres, and PAA (polyacrylate) modified microspheres. A primary shaping poly(meth)acrylate polymer is particularly preferred. The acrylate polymer has a very low softening point (about 50°C), which makes the bonding property conditions substantially lower, and because of its high distribution consistency and uniformity in the coating, the coating adhesive effect is substantially improved (about 2 times to 10 times higher than that of PVDF). Additionally, the component formed by modified grafting of hydrophilic groups on the molecular surface of the acrylate polymer (referred to as: poly(meth)acrylate polymer) can have greatly improved hydrophilicity. Its dispersion difficulty and stability in aqueous solvents are more advantageous than that of PVDF; especially because of the large particle size and low density of the primary particle, it can form a stable mosaic structure in the coating, which can reduce the gram weight of the coating, and at the same time, significantly improve the bonding property and stability.

The average particle size (D50) of the fluorine-free polymer resin particles is preferably 2 $\mu$m to 9 $\mu$m.

The ceramic particles may be at least one selected from the group consisting of aluminium oxide, boehmite, barium titanate, calcium oxide, magnesium oxide, zinc oxide, zirconium oxide, and silicon oxide, and when the ceramic particles are a mixture of a plurality of components, the amounts of the different components may be in an arbitrary ratio as long as the total amount conforms to the ceramic particles amount limit. Preferably, the ceramic powder is boehmite.

The ceramic particles have an average particle size (D50) of 0.1 $\mu$m to 4.0 $\mu$m, preferably 0.2 $\mu$m to 1.5 $\mu$m. The smaller the particle size, the higher the heat-shrinkage performance. The crystals of the ceramic particles should be free of obvious sharp protrusions, so as to avoid the protrusions from damaging the structure of the polymer. The smaller the particle size, the worse the dispersion of the particles in the slurry, to 0.1 $\mu$m or less will lead to a larger particle size of the slurry, bringing the risk of poor coating consistency.

The present application also provides a preparation method for battery separator, wherein the method includes the following steps:

step 1) dispersing a ceramic powder in water, and sanding and dispersing by a sand mill to form a dispersion;

step 2) adding a fluorine-free polymer resin liquid in emulsion form to the dispersion, adding a binder, and passing through an 80 mesh to 200 mesh sieve to form a finished slurry; and

step 3) according to the requirements of a desired coating thickness, coating the finished slurry on one or both sides of a base film using a gravure roller or a wire rod, and after the finished slurry is coated onto surface(s) of the base film, drying with an oven to obtain a battery separator with coating;

wherein, in step 1), a rotational speed of the sanding and dispersing is 500 rpm to 1500 rpm, and a time of the sanding and dispersing is 10 min to 60 min; after the end of step 1), the dispersion is cooled under low-speed stirring to maintain a temperature of the dispersion at $\leq$ 70°C, wherein a stirring speed of the low-speed stirring is 20 rpm to 300 rpm;

the finished slurry obtained in step 2) is continuously stirred at a low speed from the completion of configuration until being put into use, so that the finished slurry is always in dynamic equilibrium, and a rotational speed of the low-speed stirring is 10 rpm to 800 rpm; from the beginning of step 2) until the finished slurry is put into use, the slurry is maintained at a temperature of 5°C to 70°C; the low-speed stirring is carried out using a stirring tank with stirring blades in both upper and lower parts, and radii of the stirring blades in the upper and lower parts are not the same; and

in step 3), in the battery separator, a coating surface density $\rho_0$, a coating thickness $h_0$, an average radius r of fluorine-free polymer resin particles, a volume $V_1$ occupied by fluorine-free polymer resin particles in the coating, a number $N_0$ of fluorine-free polymer resin particles, a density $\rho$ of fluorine-free polymer resin, and a coating density $\rho_1$ of pure

ceramic coating satisfy the following relationship:

$$\frac{4\pi r^3}{3} \times \rho \times N_0 + (h_0 - V_1 \times N_0) \times \rho_1 = \rho_0$$

$$0.8\rho_1 \le \rho_0/h_0 \le 1.2\rho_1.$$

The fluorine-free polymer resin liquid in emulsion form used in the above method is not limited to being obtained by commercial purchase or self-made. The self-made method includes: mixing fluorine-free polymer resin powder, a surfactant, and water, dispersing and stirring, and forming the fluorine-free polymer resin liquid in emulsion form. The commercially purchased fluorine-free polymer resin liquid in emulsion form, for example, is: poly(meth)acrylate polymer liquid purchased from Shenzhen Haodian Science and Technology Co., Ltd under the designation of SWA709 used in Examples 1 to 3, which has a glass transition temperature of 55°C, a swelling rate of 70%, and a concentration of poly(meth)acrylate polymer of 25%; poly(meth)acrylate polymer liquid purchased from Zeon Co., Ltd. of Japan, under the designation of BM5000 used in Example 4, which has a glass transition temperature of 54°C, a swelling rate of 97%, and a concentration of poly(meth)acrylate polymer of 19%; and poly(meth)acrylate polymer liquid purchased from Sichuan Jundile Materials Co., Ltd. under the designation of FS400 used in Example 5, which has a glass transition temperature of 68°C, a swelling rate of 68%, and a concentration of poly(meth)acrylate polymer of 30%.

Preferably, the fluorine-free polymer resin liquid in emulsion form described above does not undergo structural decomposition or deformation at $pH \ge 5$ and at $pH \le 10$ (the commercially purchased poly(meth)acrylate polymer liquids described above all satisfy this condition). The reason for this is that the aqueous solution of ceramics is mostly alkaline, and the fluorine-free polymer resin liquid with too low a pH will partially undergo structural denaturation after mixing with the ceramics, thus leading to structural instability. Fluorine-free polymer resin powder in the fluorine-free polymer resin liquid in emulsion form has an average particle size D50 of 2 μm to 9 μm, and the ceramic powder has an average particle size D50 of 0.4 μm to 4.0 μm.

In addition, the reason for maintaining the temperature of the dispersion at $\le 70$°C after step 1) is that if the temperature is too high, the performance of the coating film will be affected. Processes such as high-speed dispersion or grinding will heat up the dispersion, and the fluorine-free polymer resin material needs to wait until the temperature is lowered to ≤70 °C before adding. The temperature of the dispersion solution exceeding 70°C will cause the structure of the fluorine-free polymer resin particles to be softened and sticky, and it will be impossible to maintain a complete spherical morphology, which will in turn affect the bonding property and heat resistance of the coating.

The reason for continuously stirring the finished slurry in step 2) at a low speed from the completion of the configuration until being put into use, so that the finished slurry is always in dynamic equilibrium, is to prevent layer separation of the fluorine-free polymer resin particles and the ceramic particles. Such layer separation of the fluorine-free polymer resin particles and the ceramic particles will lead to floating of the fluorine-free polymer resin particles after coating, which not only affects the consistency of the coating, but also affects the stabilization of the structure of the coating, which is prone to the so-called powder falling off such as producing large particles shedding, and imperfect bonding property. Double paddles (i.e., the upper and lower parts of the mixing tank having stirring blades) are used for mixing, and radii of the stirring blades in the upper and lower parts ($r_{upper}$, $r_{lower}$) should not be the same. That is, the ratio of the radii $r_{upper}/r_{lower} \ne 1$, of which the purpose is to form a differential speed, so that the organic particles and inorganic particles are evenly dispersed, to eliminate the phenomenon of aggregation, and to improve the stability and consistency of the coating, wherein a rotational speed of the low-speed stirring is 10 rpm to 800 rpm. High-speed stirring will make the slurry to produce foam and thus affect the consistency of the coating. From the beginning of this step until the finished slurry is put into use, the slurry is maintained at a temperature of 5°C to 70°C, and the reason is that if the temperature is too high, the structure of the fluorine-free polymer resin particles will be softened and sticky, and it will not be possible to maintain a complete spherical morphology, which will affect the bonding property and heat resistance of the coating.

In the coating of step 3), high-speed coating (50 m/min to 250 m/min) is preferable because of the high stability of the finished slurry.

The base film in the present application is not specifically limited, and may be selected with reference to existing lithium-ion battery separators. Typically, the base film may be a polyolefin base film, such as a polypropylene base film, a polyethylene base film, and the like. As one preferred embodiment, the base film is a polyethylene base film.

The base film may have a thickness of 5 μm to 12 μm. The coating may have a thickness of 1 μm to 5 μm, for example 1 μm, 2 μm, 3 μm, 4 μm, or 5 μm.

In the above method, the average particle size D50 of the fluorine-free polymer resin particles is preferably 2 μm to 9 μm; the average particle size D50 of the ceramic powder is preferably 0.4 μm to 1.5 μm.

Based on the total weight of the finished slurry, the fluorine-free polymer resin powder is 0.5 wt.% to 10 wt.%, and the ceramic powder is 15 wt.% to 40 wt.%, more preferably 20 wt.% to 35 wt.%.

A temperature of the drying is 50°C to 100°C, and a time of the drying is $\geq 5$ s.

The present application has no particular limitations on the surfactant, water and binder and the amounts thereof, and products commonly used in the field, such as those disclosed in CN115117559 A and the proportions thereof, may be used. For example the surfactant comprises surfactant A and surfactant B, the surfactant A being a polyether siloxane copolymer, and the surfactant B being a polysiloxane. The binder is at least one selected from the group consisting of polyacrylic acid, polyvinyl alcohol, polyvinyl ethyl ether, polymethylmethacrylate, polyvinyl acetate and polyurethane, preferably polyacrylic acid. Based on the total weight of the finished slurry, the surfactant A is 0.06 wt.% to 0.5 wt.%, the surfactant B is 0.1 wt.% to 0.5 wt.%, the water is 40 wt.% to 60 wt.%, and the binder is 5 wt.% to 10 wt.%.

The present application also provides a battery comprising: a positive electrode, a negative electrode, a separator disposed between the positive electrode and the negative electrode, and an electrolyte, wherein the separator is the battery separator provided by the present application.

The battery separator provided by the present application has a coating with good bonding property, high consistency, high stability, and good heat resistance. The coating has a bonding strength $\geq 0.6$ N/m, a consistency $R \leq 0.5$ $\mu$m, a probability of particle dropout $\leq 3\%$, and a thermal shrinkage rate $\leq 5\%$.

The application is further described below in connection with examples, but the scope of the application is not limited to these examples.

Example

In the following examples and comparative examples, the binder is a polyacrylic acid emulsion, purchased from Hunan Gaorui Power Material Co., Ltd. under the designation of LIB-S105B.

In the following examples and comparative examples, the number of parts refers to parts by weight unless otherwise indicated.

The following Examples 1 to 5 are used to illustrate the battery separator of the present application and the preparation method of therefor.

Example 1

1) 30 parts of boehmite (D50 of 0.8 $\mu$m) were dispersed in 54 parts of water, and sanded and dispersed by a sand mill (speed of 1000 rpm, time of 30 min) to form a dispersion. The dispersion was cooled down under low-speed (150 rpm) stirring to maintain the temperature of the dispersion at $\leq 70$°C.

2) To the dispersion was added 6 parts of poly(meth)acrylate polymer liquid in emulsion form (pH being 6.5, the glass transition temperature being 55°C, the swelling rate being 70%, D50 of the poly(meth)acrylate polymer being 4.5 $\mu$m, the concentration of the poly(meth)acrylate polymer being 25%), and 10 parts of binder, which was passed through a 200 mesh sieve to form a finished slurry.

The above finished slurry was stirred at a low speed (300 rpm) using double paddles (i.e., both the upper and lower parts of the mixing tank had mixing blades) from the time it was made until it was used in the next step, in which the radii of the upper and lower mixing blades ($r_{upper}$, $r_{lower}$) satisfy the relationship "the ratio of the radii $r_{upper}/r_{lower} \neq 1$", and the slurry was kept between 5°C and 70°C from the beginning of step 2) until the finished slurry was used in the next step.

3) According to the requirements of the desired coating thickness, the finished slurry was coated on both sides of the 7 $\mu$m thick base film using a gravure roller or a wire rod, and after the finished slurry was coated onto the surface of the base film, the finished slurry was dried with an oven (the temperature of the drying being 75°C, and the time of the drying being 10 s) to obtain a battery separator B1 with coating film.

Among the above, in step 3), in the battery separator, a coating surface density $\rho_0$, a coating thickness $h_0$, an average radius r of fluorine-free polymer resin particles, a volume $V_1$ occupied by fluorine-free polymer resin particles in the coating, a number $N_0$ of fluorine-free polymer resin particles, a density $\rho$ of fluorine-free polymer resin, and a coating density $\rho_1$ of pure ceramic coating satisfy the following relationship:

$$\frac{4\pi r^3}{3} \times \rho \times N_0 + (h_0 - V_1 \times N_0) \times \rho_1 = \rho_0$$

$$0.8\rho_1 \leq \rho_0/h_0 \leq 1.2\rho_1.$$

Each of the above parameters was measured as described in the present application and will not be repeated herein. The measured data are shown in Table 1 below.

Example 2: In this example, the method was the same as in Example 1 except that the parameters were changed as shown in Table 1, and a battery separator B2 with a coating film was produced. The produced battery separator satisfied the equation of the present application.

Example 3: In this example, the method was the same as in Example 1 except that the parameters were changed as shown in Table 1, and a battery separator B3 with a coating film was produced. The produced battery separator satisfied the equation of the present application.

Example 4: In this example, in addition to changing the parameters as shown in Table 1, the parameters of the poly(meth)acrylate polymer liquid used in step 2) were as follows: pH being 7.9, glass transition temperature being 54°C, swelling rate being 97%, D50 of the poly(meth)acrylate polymer being 4.5 $\mu$m, and concentration of poly(meth)acrylate polymer being 25%, the method was the same as in Example 1, and a battery separator B4 with a coating film was produced.

Example 5: In this example, in addition to changing the parameters as shown in Table 1, the parameters of the poly(meth)acrylate polymer liquid used in step 2) were as follows: pH being 9.4, glass transition temperature being 68°C, swelling rate being 68%, D50 of the poly(meth)acrylate polymer being 9 $\mu$m, and concentration of the poly(meth)acrylate polymer being 25%, the method was the same as in Example 1, and a battery separator B5 with a coating film was produced.

Example 6: Except that the boehmite was changed to a mixture of boehmite and $BaTiO_3$ (mass ratio 3:1) in step 1), the performance parameters of the poly(meth)acrylate polymer liquid in step 2 were as follows: pH being 6.5, glass transition temperature being 45°C, swelling rate being 150%, D50 of the poly(meth)acrylate polymer being 2.2 $\mu$m, and concentration of the poly(meth)acrylate polymer being 25%, and the amount of each component was changed according to Table 1, the rest was the same as in Example 1, and a battery separator B6 with a coating film was produced.

Example 7: Except that the boehmite was changed to a mixture of boehmite and $BaTiO_3$ (mass ratio 9:1) in step 1), the performance parameters of the poly(meth)acrylate polymer liquid in step 2 were as follows: pH being 6.5, glass transition temperature being 76°C, swelling rate being 88%, D50 of the poly(meth)acrylate polymer being 3 $\mu$m, and concentration of the poly(meth)acrylate polymer being 25%, the amount of each component was changed according to Table 1, the rest was the same as in Example 1, and a battery separator B7 with a coating film was produced.

Example 8: Except that the boehmite was changed to a mixture of boehmite and $BaTiO_3$ (mass ratio 9:5) in step 1), the poly(meth)acrylate polymer liquid was changed to a solution of SBR (styrene butadiene rubber) microspheres in step 2, with the following performance parameters: pH being 7.2, glass transition temperature being 88°C, swelling rate being 30%, D50 of SBR (styrene butadiene rubber) microspheres being 2.5 $\mu$m, and concentration of SBR (styrene butadiene rubber) microspheres being 25%, the amount of each component was changed according to Table 1, the rest was the same as that in Example 1, and a battery separator B8 with a coating film was produced.

Example 9: In addition to changing the boehmite to a mixture of boehmite and BaTiO3 (mass ratio 3:1) in step 1), the poly(meth)acrylate polymer liquid was changed to a solution of PI (polyimide) water-soluble microspheres in step 2, with the following performance parameters: pH being 6.8, glass transition temperature being 90°C, swelling rate being 55%, D50 of PI (polyimide) water-soluble microspheres being 4.5 $\mu$m, and concentration of PI (polyimide) water-soluble microspheres being 25%, the amount of each component was changed according to Table 1, the rest was the same as that in Example 1, and a battery separator B9 with a coating film was produced.

Comparative example 1: In this comparative example, the method was the same as in Example 1 except that a PVDF liquid self-made from PVDF powder was used instead of the poly(meth)acrylate polymer liquid, and a battery separator C1 with a coating film was produced.

PVDF liquid was prepared as follows: 1.5 parts of PVDF powder, 0.005 parts of polysiloxane surfactant, and 4.5 parts of water were mixed to obtain 6 parts of PVDF liquid.

The PVDF powder was purchased from Dongyangguang Company, under the designation of 2600.

In this comparative example, the density of the PVDF cannot be calculated due to the unstable morphology of the PVDF spheres, and therefore this comparative example is not applicable to the equation of the present application.

Comparative examples 2 to 3: Except that some of the parameter data as shown in Table 1 were different from that of Example 1, that the dispersion formed in step 1) of the slurrying process was directly mixed in the next step without cooling down, and that the finished slurry was stirred at a low speed (300 rpm) using a single paddle from the time it was made until it was used in the next step, i.e., the stirring paddle had relationship of "the ratio of the radii $r_{upper}/r_{lower} = 1$", the rest was the same as that in Example 1, and the battery separators C2 to C3 with a coating film were produced.

Comparative example 4: The same as Example 8 except that the type of fluorine-free polymer resin was different from Example 8, and the performance parameters of the poly(meth)acrylate polymer liquid used in this comparative example were as follows: pH being 6.5, glass transition temperature being 38°C, swelling rate being 244%, D50 of the poly(meth)acrylate polymer being 1 μm, and concentration of the poly(meth)acrylate polymer being 25%.

Comparative example 5: The same as Example 8 except that the type of fluorine-free polymer resin was different from Example 8, and the performance parameters of the poly(meth)acrylate polymer liquid used in this comparative example were as follows: pH being 6.5, glass transition temperature being 37°C, swelling rate being 300%, D50 of the poly(meth)acrylate polymer being 4.5 μm, and concentration of the poly(meth)acrylate polymer being 25%.

Comparative example 6: In this comparative example, the method is the same as in Example 1 except that the parameters are changed according to Table 1, and a battery separator C6 with a coating film was produced. The produced battery separator does not satisfy the equation of the present application.

Table 1 Parameter data for B1 to B9 and C2 to C6

| Parameters | Example 1 | Example 2 | Example 3 | Example 4 | Example 5 | Example 6 | Example 7 | Example 8 | Example 9 | Comparative example 2 | Comparative example 3 | Comparative example 4 | Comparative example 5 | Comparative example 6 |
|---|---|---|---|---|---|---|---|---|---|---|---|---|---|---|
| Ceramic type | Bochmite | Boehmite | Boehmite | Boehmite | Boehmite | Boehmite, BaTiO3 | Boehmite, BaTiO3 | Boehmite, BaTiO3 | Boehmite, BaTiO3 | Boehmite | Boehmite | Boehmite, BaTiO3 | Boehmite, BaTiO3 | Boehmite |
| Average particle size of ceramic particles D50 ($\mu$m) | 0.8 | 0.2 | 1.5 | 0.8 | 1.2 | 0.5 | 0.6 | 0.8 | 0.6 | 1.5 | 0.15 | 0.8 | 0.8 | 0.8 |
| Amount of ceramic particles (parts) | 30 | 20 | 35 | 30 | 30 | 24 | 27 | 27 | 30 | 30 | 30 | 27 | 27 | 28 |
| Amount of water (parts) | 54 | 50 | 41 | 54 | 54 | 41 | 45 | 45 | 54 | 54 | 54 | 45 | 45 | 49 |
| Rotational speed of sanding and dispersing (rpm) | 1000 | 1300 | 500 | 1000 | 1000 | 1000 | 1000 | 1000 | 1000 | 1000 | 1000 | 1000 | 1000 | 1000 |
| Time of the sanding and dispersion (min) | 30 | 60 | 20 | 30 | 30 | 30 | 30 | 30 | 30 | 30 | 30 | 30 | 30 | 30 |
| Stirring speed of cooling the dispersion at low speed (rpm) | 150 | 20 | 300 | 150 | 150 | 150 | 150 | 150 | 150 | 150 | 150 | 150 | 150 | 150 |
| Temperature of the dispersion (°C) | ≤70 | Same as Example 1 | Same as Example 1 | Same as Example 1 | Same as Example 1 | Same as Example 1 | Same as Example 1 | Same as Example 1 | Same as Example 1 | >70 | >70 | Same as Example 1 | Same as Example 1 | Same as Example 1 |

EP 4 507 107 B1

12

(continued)

| Parameters | Example 1 | Example 2 | Example 3 | Example 4 | Example 5 | Example 6 | Example 7 | Example 8 | Example 9 | Comparative example 2 | Comparative example 3 | Comparative example 4 | Comparative example 5 | Comparative example 6 |
|---|---|---|---|---|---|---|---|---|---|---|---|---|---|---|
| Weight ratio of ceramic particles (%) based on the total weight of the finished slurry | 30 | 20 | 35 | 30 | 30 | 24 | 27 | 27 | 30 | 30 | 30 | 27 | 27 | 28 |
| Amount of binder added (parts) | 10 | 23.4 | 15.3 | 10 | 10 | 11 | 12.1 | 12.1 | 10 | 10 | 10 | 12.1 | 12.1 | 10.9 |
| Fluorine-free polymer resin type | Poly (meth) acrylate | Poly (meth) acrylate | Poly (meth) acrylate | Poly (meth) acrylate | Poly (meth) acrylate | Poly (meth) acrylate | Poly (meth) acrylate | SBR (styrene butadiene rubber) microspheres | PI (polyimide) water-soluble microspheres | Poly (meth) acrylate | Poly (meth) acrylate | Poly (meth) acrylate | Poly (meth) acrylate | Poly (meth) acrylate |
| Average particle size of fluorine-free polymer resin particles D50 ($\mu$m) | 45 | 2.5 | 6 | 4.5 | 9 | 2.2 | 3 | 2.5 | 4.5 | 10 | 1 | 1 | 4.5 | 3 |
| Amount of fluorine-free polymer resin liquid (parts) | 6 | 6.6 | 8.7 | 6 | 6 | 24 | 15.9 | 15.9 | 6 | 6 | 6 | 15.9 | 15.9 | 12.1 |
| Glass transition temperature of fluorine-free polymer resin (°C) | 55 | 55 | 55 | 54 | 68 | 45 | 76 | 88 | 90 | 55 | 55 | 38 | 37 | 55 |

EP 4 507 107 B1

13

| Parameters | Example 1 | Example 2 | Example 3 | Example 4 | Example 5 | Example 6 | Example 7 | Example 8 | Example 9 | Comparative example 2 | Comparative example 3 | Comparative example 4 | Comparative example 5 | Comparative example 6 |
|---|---|---|---|---|---|---|---|---|---|---|---|---|---|---|
| Swelling rate of fluorine-free polymer resin (%) | 70 | 70 | 70 | 97 | 68 | 150 | 88 | 30 | 55 | 70 | 70 | 244 | 300 | 70 |
| Weight ratio of fluorine-free polymer resin (%) based on the total weight of the finished slurry | 1.5 | 1.7 | 2.2 | 1.5 | 1.5 | 6.0 | 4.0 | 4.0 | 1.5 | 1.5 | 1.5 | 4.0 | 4.0 | 3.0 |
| Whether there are fluorine-free polymer resin particles floating in the slurry | No | Same as Example 1 | Same as Example 1 | Same as Example 1 | Same as Example 1 | Same as Example 1 | Same as Example 1 | Same as Example 1 | Same as Example 1 | Same as Example 1 | Same as Example 1 | Same as Example 1 | Yes | Same as Example 1 |
| Ratio of stirring blade radii $r_{upper}/r_{lower}$ (%) | 10 | Same as Example 1 | Same as Example 1 | Same as Example 1 | Same as Example 1 | 50 | 50 | 75 | 75 | 1 | 1 | Same as Example 1 | Same as Example 1 | Same as Example 1 |
| Mixing speed (rpm) of mixing the finished slurry at low speed | 300 | 10 | 800 | 300 | 300 | 300 | 300 | 300 | 300 | 300 | 300 | 300 | 300 | 300 |
| Slurry temperature (°C) | 5°C-70 °C | Same as Example 1 | Same as Example 1 | Same as Example 1 | Same as Example 1 | Same as Example 1 | Same as Example 1 | Same as Example 1 | Same as Example 1 | Same as Example 1 | Same as Example 1 | Same as Example 1 | >70 | Same as Example 1 |
| Coating speed (m/min) | 150 | Same as Example 1 | Same as Example 1 | Same as Example 1 | Same as Example 1 | 200 | 200 | 250 | 250 | Same as Example 1 | Same as Example 1 | Same as Example 1 | Same as Example 1 | Same as Example 1 |

EP 4 507 107 B1

14

(continued)

| Parameters | Example 1 | Example 2 | Example 3 | Example 4 | Example 5 | Example 6 | Example 7 | Example 8 | Example 9 | Comparative example 2 | Comparative example 3 | Comparative example 4 | Comparative example 5 | Comparative example 6 |
|---|---|---|---|---|---|---|---|---|---|---|---|---|---|---|
| Drying temperature (°C) | 75 | 60 | 90 | Same as Example 1 | Same as Example 1 | Same as Example 1 | Same as Example 1 | Same as Example 1 | Same as Example 1 | 75 | 75 | Same as Example 1 | Same as Example 1 | Same as Example 1 |
| Drying time (s) | 10 | 20 | 5 | Same as Example 1 | Same as Example 1 | Same as Example 1 | Same as Example 1 | Same as Example 1 | Same as Example 1 | 10 | 10 | Same as Example 1 | Same as Example 1 | Same as Example 1 |
| Coating thickness $h_0$ (m) | $2 \times 10^{-6}$ | $1.0 \times 10^{-6}$ | $2 \times 10^{-6}$ | $3.5 \times 10^{-6}$ | $4 \times 10^{-6}$ | $1.8 \times 10^{-6}$ | $1.5 \times 10^{-6}$ | $2 \times 10^{-6}$ | $2 \times 10^{-6}$ | $2 \times 10^{-6}$ | $8 \times 10^{-7}$ | $1 \times 10^{-6}$ | $1 \times 10^{-6}$ | $1 \times 10^{-6}$ |
| Spherical cap volume V, ($m^3$) | $1.99 \times 10^{-17}$ | $2.88 \times 10^{-18}$ | $7.06 \times 10^{-17}$ | $1.99 \times 10^{-17}$ | $1.59 \times 10^{-16}$ | $4.24 \times 10^{-18}$ | $7.1 \times 10^{-18}$ | $5.8 \times 10^{-18}$ | $1.99 \times 10^{-17}$ | $5.44 \times 10^{-17}$ | $4.69 \times 10^{-19}$ | $5.24 \times 10^{-19}$ | $6.02 \times 10^{-18}$ | $3.67 \times 10^{-18}$ |
| Number of fluorine-free polymer resin particles $N_0$ (counts) | $2.3 \times 10^9$ | $4.0 \times 10^{10}$ | $1.7 \times 10^9$ | $2.3 \times 10^9$ | $1.2 \times 10^9$ | $1.4 \times 10^{11}$ | $8.14 \times 10^{10}$ | $9.3 \times 10^{10}$ | $2.3 \times 10^9$ | $1.3 \times 10^9$ | $1.1 \times 10^{12}$ | $1.74 \times 10^{12}$ | $8.14 \times 10^9$ | $3.49 \times 10^{10}$ |
| Density of fluorine-free polymer resin $\rho$ (g/$m^3$) | $1.1 \times 10^6$ | $1.1 \times 10^6$ | $1.1 \times 10^6$ | $1.1 \times 10^6$ | $1.08 \times 10^6$ | $1.1 \times 10^6$ | $1.1 \times 10^6$ | $0.94 \times 10^6$ | $1.15 \times 10^6$ | $1.1 \times 10^6$ | $1.1 \times 10^6$ | $1.1 \times 10^6$ | $1.1 \times 10^6$ | $1.15 \times 10^6$ |
| Coating density of pure ceramic coating $\rho_1$ (g/$m^3$) | $1.4 \times 10^6$ | $1.7 \times 10^6$ | $1.0 \times 10^6$ | $1.4 \times 10^6$ | $1.0 \times 10^6$ | $2.1 \times 10^6$ | $1.5 \times 10^6$ | $1.6 \times 10^6$ | $1.5 \times 10^6$ | $1.0 \times 10^6$ | $2.3 \times 10^6$ | $1.6 \times 10^6$ | $1.4 \times 10^6$ | $1.4 \times 10^6$ |
| Coating surface density $\rho_0$ (g/$m^2$) | 2.85 | 1.86 | 3.59 | 2.85 | 4.3 | 3.14 | 2.65 | 2.82 | 3.06 | 2.64 | 1.29 | 1.14 | 1.76 | 1.79 |
| Relationship of $(\rho_0/h_0)/\rho_1$ | 1.0 | 1.1 | 1.0 | 1 | 1.1 | 0.8 | 1.2 | 0.9 | 1 | 1.3 | 0.7 | 0.7 | 1.3 | 1.3 |

The performance of battery separators B1 to B9 and C2 to C6 were tested as follows, and the results are shown in Table 2 below.

(1) Bonding property:

The bonding property referred to in the present application is the degree to which the battery separator is tightly and uniformly bonded to the battery electrode sheet during battery cell assembly. In particular, the bonding property is assessed in accordance with the following method: testing with reference to the requirements of GB/T 2792.

　　　1) Stacking A4 paper and the separator in the order of A4 paper/separator/separator/A4 paper, with the separator coating facing towards the separator coating;

　　　2) performing thermoplastic treatment to the stacked A4 paper and separator at 100°C; and

　　　3) cutting the separator after thermoplastic treatment into a long strip of 200 mm long and 25 mm wide, with the distance between the clamps being (100±5) mm, and the test speed being (50±10) mm/min.

(2) Consistency:

The consistency referred to in the present application is the degree of uniformity and consistency of the stacking of the ceramic particles within the mixed coating of the fluorine-free polymer resin particles and the ceramic particles. The presence of larger particles of the fluorine-free polymer resin will cause the uniformity of the stacking of the ceramic particles to deteriorate, adversely affecting the uniformity of the mechanical structure of the coating.

Using a foam having a certain resilience and density (the present application used a beauty blender made of polyurethane type foam), the thickness of the ceramic layer can be obtained and monitored by placing the prepared battery separator on a horizontal table, fixing the separator with one hand, and using the foam with the other hand to wipe the surface of the film 6 times to 8 times from left to right, so that the PMMA particles can be removed from the coating without damaging the ceramic layer. In particular, the consistency can be evaluated by preparing a cross-section sample of the battery separator at 21°C ± 4°C and humidity ≤ 65% RH, and obtaining a cross-section electron microscope picture by capturing with an electron microscope of Zeiss brand SIGMA 300 model. On the picture, the thicknesses at any 10 positions of the single-coated ceramic stacking layer were measured, the extreme difference R (max-min) of the thicknesses at these 10 positions was calculated, and good consistency was indicated if R ≤0.5 $\mu$m.

(3) Stability:

The stability referred to in the present application is the degree of firmness to which the fluorine-free polymer resin particles are embedded in the coating.

In particular, the stability can be evaluated by: randomly sampling the finished battery separator after it has been rolled over a 90-degree angle wrapped roller for 20 times, taking 1000x electron microscope images (which can be 500x to 5000x), and counting the probability of particles falling off (number of PMMA or PVDF particles falling off/total number of PMMA or PVDF particles).

(4) Heat Resistance:

The heat resistance referred to in the present application is the heat shrinkage performance of the battery separator. In particular, the heat resistance can be assessed by measuring the heat shrinkage rate, which is tested in accordance with the method specified in GB/T12027-2004, and the average of the heat shrinkage rate in the TD direction and the heat shrinkage rate in the MD direction is taken.

Table 2 Performance test results for B1 to B5 and C1 to C3

| Performance of battery Separator | Example 1 | Example 2 | Example 3 | Example 4 | Example 5 | Example 6 | Example 7 | Example 8 | Example 9 | Comparative example 1 | Comparative example 2 | Comparative example 3 | Comparative example 4 | Comparative example 5 | Comparative example 6 |
|---|---|---|---|---|---|---|---|---|---|---|---|---|---|---|---|
| Bonding property: bonding strength (N/m) | 1.2 | 7.4 | 1.5 | 1.9 | 0.8 | 8.2 | 2.5 | 3.3 | 1.9 | 0.4 | 2.1 | 6.0 | 0.5 | 2.2 | 6.6 |
| Consistency (μm) | 0.2 | 0.1 | 0.4 | 0.2 | 0.3 | 0.2 | 0.4 | 0.1 | 0.4 | 0.9 | 0.7 | 0.2 | 0.1 | 0.2 | 0.4 |
| Stability: probability of particle falling off | 0 | 0 | 0 | 0 | 0 | 0 | 1 | 0 | 0 | 9 | 50 | 1 | 0 | 13 | 10 |
| Heat resistance: Heat shrinkage (%) | 1.5 | 1.7 | 1.9 | 1.5 | 1.4 | 4.5 | 2.9 | 2 | 0.5 | 9.7 | 0.9 | 28 | 39 | 58 | 44 |

As can be seen from the data in Table 2, the battery separator provided by the present application has a coating with good bonding property, high consistency, high stability, and good heat resistance.

As for the battery separator prepared in Comparative example 1, due to the use of PVDF, that is prone to float on the surface of the coating, the coating was very unstable, and the coating has a high thermal shrinkage and poor heat resistance.

As can be seen from Tables 1 and 2, regardless of how the various types of parameters change, when the condition of "$0.8\rho_1 \leq \rho_0/h_0 \leq 1.2\rho_1$" is satisfied, the coating combines the advantages of good bonding property, high consistency, high stability, and good heat resistance. Whereas, when the above condition is not satisfied, the balanced advantages no longer exist.

**Claims**

1. A battery separator comprising a base film and a coating coated on one or both sides of the base film, wherein

the coating comprises: fluorine-free polymer resin particles and ceramic particles,
wherein the fluorine-free polymer resin particles have a primary particle morphology or a secondary agglomerate morphology, and the fluorine-free polymer resin particles are in spherical form and dispersed within the ceramic particles,
a coating surface density $\rho_0$, a coating thickness $h_0$, an average radius r of fluorine-free polymer resin particles, a volume $V_1$ occupied by fluorine-free polymer resin particles in the coating, a number $N_0$ of fluorine-free polymer resin particles, a density $\rho$ of fluorine-free polymer resin, and a coating density $\rho_1$ of pure ceramic coating satisfy the following relationship:

$$\frac{4\pi r^3}{3} \times \rho \times N_0 + (h_0 - V_1 \times N_0) \times \rho_1 = \rho_0$$

$$0.8\rho_1 \leq \rho_0/h_0 \leq 1.2\rho_1;$$

the fluorine-free polymer resin has a glass transition temperature of 40°C to 100°C and a swelling rate of 10% to 200%;
$N_0$ is the number of fluorine-free polymer resin particles comprised in a 1 m$^2$ separator, which is obtained by first counting a number of fluorine-free polymer resin particles under 1K electron microscopy and then converting counted number according to area;
the density $\rho$ is measured using the raw material of fluorine-free polymer resin or the fluorine-free polymer resin particles that are separated from the coating and then collected, and the density $\rho$ is measured with an electronic scale and a graduated cylinder;

the coating density $\rho_1$ is obtained by using the ceramic particles, coating with a gravure roller or a wire rod to form a film, and measuring the surface density of the film with an electronic scale and a steel straightedge; and the coating surface density $\rho_0$ is calculated by the above equation.

2. The battery separator according to claim 1, wherein the fluorine-free polymer resin has the glass transition temperature of 45°C to 70°C and the swelling rate of 10% to 100%.

3. The battery separator according to claim 1, wherein the fluorine-free polymer resin is a poly(meth)acrylate polymer.

4. The battery separator according to claim 1, wherein the fluorine-free polymer resin particles have an average particle size D50 of 2 $\mu$m to 9 $\mu$m; the average particle size D50 of the fluorine-free polymer resin particles is determined from the raw material of fluorine-free polymer resin, or determined by taking any 5 samples of fluorine-free polymer resin particles using an electron microscopy method, measuring the diameters of these samples, and calculating the average value.

5. The battery separator according to claim 1, wherein the ceramic particles are at least one selected from the group consisting of aluminium oxide, boehmite, barium titanate, calcium oxide, magnesium oxide, zinc oxide, zirconium oxide, and silicon oxide.

6. The battery separator according to claim 5, wherein the ceramic particles are boehmite.

7. The battery separator according to claim 1, wherein the ceramic particles have an average particle size D50 of 0.1 $\mu$m to 4.0 $\mu$m; the average particle size D50 of the ceramic particles is determined from the raw material of ceramic, or determined by taking any 5 samples of ceramic particles using an electron microscopy method, measuring the diameters of these samples, and calculating the average value.

8. A preparation method for battery separator, wherein the method comprises the following steps:

step 1) dispersing a ceramic powder in water, and sanding and dispersing by a sand mill to form a dispersion;
step 2) adding a fluorine-free polymer resin liquid in emulsion form to the dispersion, adding a binder, and passing through an 80 mesh to 200 mesh sieve to form a finished slurry; and
step 3) according to the requirements of a desired coating thickness, coating the finished slurry on one or both sides of a base film using a gravure roller or a wire rod, and after the finished slurry is coated onto surface(s) of the base film, drying with an oven to obtain a battery separator with coating;
wherein, in step 1), a rotational speed of the sanding and dispersing is 500 rpm to 1500 rpm, and a time of the sanding and dispersing is 10 min to 60 min; after the end of step 1), the dispersion is cooled under low-speed stirring to maintain a temperature of the dispersion at $\leq 70$°C, wherein a stirring speed of the low-speed stirring is 20 rpm to 300 rpm;
the finished slurry obtained in step 2) is continuously stirred at a low speed from the completion of configuration until being put into use, so that the finished slurry is always in dynamic equilibrium, and a rotational speed of the low-speed stirring is 10 rpm to 800 rpm; from the beginning of step 2) until the finished slurry is put into use, the slurry is maintained at a temperature of 5°C to 70°C; the low-speed stirring is carried out using a stirring tank with stirring blades in both upper and lower parts, and radii of the stirring blades in the upper and lower parts are not the same;
in step 3), in the battery separator, a coating surface density $\rho_0$, a coating thickness $h_0$, an average radius r of fluorine-free polymer resin particles, a volume $V_1$ occupied by fluorine-free polymer resin particles in the coating, a number $N_0$ of fluorine-free polymer resin particles, a density $\rho$ of fluorine-free polymer resin, and a coating density $\rho_1$ of pure ceramic coating satisfy the following relationship:

$$\frac{4\pi r^3}{3} \times \rho \times N_0 + (h_0 - V_1 \times N_0) \times \rho_1 = \rho_0$$

$$0.8\rho_1 \leq \rho_0/h_0 \leq 1.2\rho_1;$$

the fluorine-free polymer resin has a glass transition temperature of 40°C to 100°C and a swelling rate of 10% to 200%;

$N_0$ is the number of fluorine-free polymer resin particles comprised in a 1 m$^2$ separator, which is obtained by first counting a number of fluorine-free polymer resin particles under 1K electron microscopy and then converting counted number according to area;

the density $\rho$ is measured using the raw material of fluorine-free polymer resin or the fluorine-free polymer resin particles that are separated from the coating and then collected, and the density $\rho$ is measured with an electronic scale and a graduated cylinder;

the coating density $\rho_1$ is obtained by using the ceramic particles, coating with a gravure roller or a wire rod to form a film, and measuring the surface density of the film with an electronic scale and a steel straightedge; and

the coating surface density $\rho_0$ is calculated by the above equation.

9. The preparation method according to claim 8, wherein the fluorine-free polymer resin liquid in emulsion form does not undergo structural decomposition or deformation at pH $\geq$ 5 and at pH $\leq$ 10; fluorine-free polymer resin powder in the fluorine-free polymer resin liquid in emulsion form has an average particle size D50 of 2 $\mu$m to 9 $\mu$m;

the ceramic powder has an average particle size D50 of 0.4 $\mu$m to 4.0 $\mu$m; and

the average particle sizes D50 of the fluorine-free polymer resin powder and the ceramic powder are determined from the raw material of fluorine-free polymer resin or ceramic, respectively, or determined by taking any 5 samples of fluorine-free polymer resin powder or ceramic powder, respectively, using an electron microscopy method, measuring the diameters of these samples, and calculating the average value.

10. The preparation method according to claim 8, wherein, based on the total weight of the finished slurry, the fluorine-free polymer resin powder is 0.5 wt.% to 10 wt.%, and the ceramic powder is 15 wt.% to 40 wt.%.

11. The preparation method according to claim 10, wherein, based on the total weight of the finished slurry, the fluorine-free polymer resin powder is 5 wt.% to 10 wt.%; and the ceramic powder is 20 wt.% to 35 wt.%.

12. The preparation method according to claim 8, wherein, in the coating of step 3), high-speed coating is used, and a speed of the high-speed coating is 50 m/min to 250 m/min; and

a temperature of the drying is 50°C to 100°C, and a time of the drying is $\geq$ 5 s.

13. The preparation method according to claim 12, wherein the temperature of the drying is 60°C to 90°C.

14. A battery comprising: a positive electrode, a negative electrode, a separator disposed between the positive electrode and the negative electrode, and an electrolyte, wherein the separator is the battery separator according to any one of claims 1-7.

**Patentansprüche**

1. Batterieseparator, umfassend eine Basisschicht und eine Beschichtung, die auf einer oder beiden Seiten der Basisschicht aufgebracht ist, wobei

die Beschichtung umfasst: fluorfreie Polymerharzpartikel und Keramikpartikel;

wobei die fluorfreien Polymerharzpartikel eine Primärpartikelmorphologie oder eine sekundäre Agglomeratmorphologie aufweisen, und die fluorfreien Polymerharzpartikel sphärisch ausgebildet sind und innerhalb der Keramikpartikel dispergiert sind,

eine Beschichtungsflächenmasse $\rho_0$, eine Beschichtungsdicke $h_0$, ein mittlerer Radius r der fluorfreien Polymerharzpartikel, ein Volumen $V_1$, das von den fluorfreien Polymerharzpartikeln in der Beschichtung eingenommen wird, eine Anzahl $N_0$ der fluorfreien Polymerharzpartikel, eine Dichte $\rho$ des fluorfreien Polymerharzes und eine Beschichtungsdichte $\rho_1$ einer reinen Keramikbeschichtung die folgende Beziehung erfüllen:

$$\frac{4\pi r^3}{3} \times \rho \times N_0 + (h_0 - V_1 \times N_0) \times \rho_1 = \rho_0$$

$$0.8\rho_1 \leq \rho_0/h_0 \leq 1.2\rho_1;$$

das fluorfreie Polymerharz eine Glasübergangstemperatur von 40 °C bis 100 °C und eine Schwellrate von 10 % bis 200 % aufweist;

$N_0$ die Anzahl der fluorfreien Polymerharzpartikel ist, die in 1 m$^2$ Separator enthalten sind, welche dadurch erhalten wird, dass zunächst die Anzahl der fluorfreien Polymerharzpartikel unter 1K-Elektronenmikroskopie gezählt wird und die gezählte Anzahl anschließend flächenbezogen umgerechnet wird;

die Dichte $\rho$ unter Verwendung des Rohmaterials des fluorfreien Polymerharzes oder der aus der Beschichtung abgetrennten und anschließend gesammelten fluorfreien Polymerharzpartikel gemessen wird, und die Dichte $\rho$ mittels einer elektronischen Waage und eines Messzylinders bestimmt wird;

die Beschichtungsdichte $\rho_1$ dadurch erhalten wird, dass die Keramikpartikel verwendet werden, mittels einer Gravurwalze oder eines Drahtstabs aufgetragen werden, um einen Film zu bilden, und anschließend die Flächenmasse des Films mit einer elektronischen Waage und einem Stahl-Lineal gemessen wird; und

die Beschichtungsflächenmasse $\rho_0$ anhand der vorstehenden Gleichung berechnet wird.

2. Batterieseparator nach Anspruch 1, **dadurch gekennzeichnet, dass** das fluorfreie Polymerharz eine Glasübergangstemperatur von 45 °C bis 70 °C und eine Schwellrate von 10 % bis 100 % aufweist.

3. Batterieseparator nach Anspruch 1, **dadurch gekennzeichnet, dass** das fluorfreie Polymerharz ein Poly(meth)acrylat-Polymer ist.

4. Batterieseparator nach Anspruch 1, **dadurch gekennzeichnet, dass** die fluorfreien Polymerharzpartikel eine mittlere Partikelgröße D50 von 2 $\mu$m bis 9 $\mu$m aufweisen; wobei die mittlere Partikelgröße D50 der fluorfreien Polymerharzpartikel aus dem Rohmaterial des fluorfreien Polymerharzes bestimmt wird oder dadurch bestimmt wird, dass beliebige fünf Proben von fluorfreien Polymerharzpartikeln mittels eines Elektronenmikroskopieverfahrens entnommen werden, die Durchmesser dieser Proben gemessen werden und anschließend der Mittelwert berechnet wird.

5. Batterieseparator nach Anspruch 1, **dadurch gekennzeichnet, dass** die Keramikpartikel mindestens eines ausgewählt aus der Gruppe bestehend aus Aluminiumoxid, Böhmit, Bariumtitanat, Calciumoxid, Magnesiumoxid, Zinkoxid, Zirkoniumoxid und Siliziumoxid sind.

6. Batterieseparator nach Anspruch 5, **dadurch gekennzeichnet, dass** die Keramikpartikel Böhmit sind.

7. Batterieseparator nach Anspruch 1, **dadurch gekennzeichnet, dass** die Keramikpartikel eine mittlere Partikelgröße D50 von 0,1 $\mu$m bis 4,0 $\mu$m aufweisen; wobei die mittlere Partikelgröße D50 der Keramikpartikel aus dem Rohmaterial der Keramik bestimmt wird oder dadurch bestimmt wird, dass beliebige fünf Proben von Keramikpartikeln mittels eines Elektronenmikroskopieverfahrens entnommen werden, die Durchmesser dieser Proben gemessen werden und anschließend der Mittelwert berechnet wird.

8. Verfahren zur Herstellung eines Batterieseparators, wobei das Verfahren die folgenden Schritte umfasst:

Schritt 1) Dispergieren eines Keramikpulvers in Wasser sowie Schleifen und Dispergieren mittels einer Sandmühle, um eine Dispersion zu bilden;

Schritt 2) Zugeben einer fluorfreien Polymerharz-Flüssigkeit in Emulsionsform zu der Dispersion, Zugeben eines Bindemittels und Sieben durch ein 80-Mesh- bis 200-Mesh-Sieb, um eine fertige Suspension zu bilden; und

Schritt 3) entsprechend den Anforderungen einer gewünschten Beschichtungsdicke, Auftragen der fertigen Suspension auf eine oder beide Seiten einer Basisschicht mittels einer Gravurwalze oder eines Drahtstabs, und nach dem Auftragen der fertigen Suspension auf die Oberfläche(n) der Basisschicht Trocknen in einem Ofen, um einen Batterieseparator mit Beschichtung zu erhalten;

wobei in Schritt 1) eine Drehzahl des Schleifens und Dispergierens 500 U/min bis 1500 U/min beträgt und eine Dauer des Schleifens und Dispergierens 10 min bis 60 min beträgt;

nach dem Ende von Schritt 1) die Dispersion unter langsamer Rührung gekühlt wird, um eine Temperatur der Dispersion von 5 °C bis 70 °C aufrechtzuerhalten, wobei eine Rührgeschwindigkeit der langsamen Rührung 20 U/min bis 300 U/min beträgt;

die in Schritt 2) erhaltene fertige Suspension kontinuierlich mit niedriger Geschwindigkeit gerührt wird, von der Beendigung der Herstellung bis zur Verwendung, sodass sich die fertige Suspension stets in einem dynamischen Gleichgewicht befindet, und eine Drehzahl der langsamen Rührung 10 U/min bis 800 U/min beträgt; die Suspension vom Beginn von Schritt 2) bis zur Verwendung bei einer Temperatur von 5 °C bis 70 °C gehalten wird; die langsame Rührung unter Verwendung eines Rührbehälters mit Rührblättern in einem oberen und einem unteren Bereich durchgeführt wird, und Radien der Rührblätter im oberen und unteren Bereich nicht gleich sind; in Schritt 3) im Batterieseparator eine Beschichtungsflächenmasse $\rho_0$, eine Beschichtungsdicke h0, ein mittlerer Radius r der fluorfreien Polymerharzpartikel, ein Volumen $V_1$, das von den fluorfreien Polymerharzpartikeln in der Beschichtung eingenommen wird, eine Anzahl $N_0$ der fluorfreien Polymerharzpartikel, eine Dichte $\rho$ des fluorfreien Polymerharzes sowie eine Beschichtungsdichte $\rho_1$ einer reinen Keramikbeschichtung die folgende Beziehung erfüllen:

$$\frac{4\pi r^3}{3} \times \rho \times N_0 + (h_0 - V_1 \times N_0) \times \rho_1 = \rho_0$$

$$0.8\rho_1 \leq \rho_0/h_0 \leq 1.2\rho_1;$$

das fluorfreie Polymerharz eine Glasübergangstemperatur von 40 °C bis 100 °C und eine Schwellrate von 10 % bis 200 % aufweist;

$N_0$ die Anzahl der fluorfreien Polymerharzpartikel ist, die in 1 m$^2$ Separator enthalten sind, wobei $N_0$ dadurch erhalten wird, dass zunächst die Anzahl der fluorfreien Polymerharzpartikel unter 1K-Elektronenmikroskopie gezählt wird und die gezählte Anzahl anschließend flächenbezogen umgerechnet wird;

wobei die Dichte $\rho$ unter Verwendung des Rohmaterials des fluorfreien Polymerharzes oder der aus der Beschichtung abgetrennten und anschließend gesammelten fluorfreien Polymerharzpartikel gemessen wird, und die Dichte $\rho$ mittels einer elektronischen Waage und eines Messzylinders bestimmt wird;

wobei die Beschichtungsdichte $\rho_1$ dadurch erhalten wird, dass die Keramikpartikel verwendet werden, mittels einer Gravurwalze oder eines Drahtstabs eine Beschichtung aufgetragen wird, um einen Film zu bilden, und anschließend die Beschichtungsflächenmasse des Films mit einer elektronischen Waage und einem Stahl-Lineal gemessen wird; und

wobei die Beschichtungsflächenmasse $\rho_0$ anhand der vorstehenden Gleichung berechnet wird.

9.  Herstellungsverfahren nach Anspruch 8,

    **dadurch gekennzeichnet, dass** die fluorfreie Polymerharzflüssigkeit in Emulsionsform bei pH ≥ 5 und bei einem pH ≤ 10 keine strukturelle Zersetzung oder Verformung erfährt; dass fluorfreies Polymerharzpulver in der fluorfreien Polymerharzflüssigkeit in Emulsionsform eine mittlere Partikelgröße D50 von 2 μm bis 9 μm aufweist; das Keramikpulver eine mittlere Partikelgröße D50 von 0,4 μm bis 4,0 μm aufweist; und

    die mittleren Partikelgrößen D50 des fluorfreien Polymerharzpulvers und des Keramikpulvers jeweils aus dem Rohmaterial des fluorfreien Polymerharzes bzw. der Keramik bestimmt werden oder jeweils dadurch bestimmt werden, dass beliebige fünf Proben des fluorfreien Polymerharzpulvers bzw. des Keramikpulvers mittels eines Elektronenmikroskopieverfahrens entnommen werden, die Durchmesser dieser Proben gemessen werden und anschließend der Mittelwert berechnet wird.

10. Herstellungsverfahren nach Anspruch 8, **dadurch gekennzeichnet, dass** bezogen auf das Gesamtgewicht der fertigen Suspension das fluorfreie Polymerharzpulver 0,5 Gew.-% bis 10 Gew.-% beträgt und das Keramikpulver 15 Gew.-% bis 40 Gew.-% beträgt.

11. Herstellungsverfahren nach Anspruch 10, **dadurch gekennzeichnet, dass** bezogen auf das Gesamtgewicht der fertigen Suspension das fluorfreie Polymerharzpulver 5 Gew.-% bis 10 Gew.-% beträgt und das Keramikpulver 20 Gew.-% bis 35 Gew.-% beträgt.

12. Herstellungsverfahren nach Anspruch 8, **dadurch gekennzeichnet, dass** in der Beschichtung gemäß Schritt 3) eine Hochgeschwindigkeitsbeschichtung verwendet wird und eine Geschwindigkeit der Hochgeschwindigkeitsbeschichtung 50 m/min bis 250 m/min beträgt; und dass eine Trocknungstemperatur 50 °C bis 100 °C beträgt und eine Trocknungszeit ≥ 5 s ist.

13. Herstellungsverfahren nach Anspruch 12, **dadurch gekennzeichnet, dass** die Trocknungstemperatur 60 °C bis 90 °C beträgt.

14. Batterie, umfassend: eine positive Elektrode, eine negative Elektrode, einen Separator, der zwischen der positiven Elektrode und der negativen Elektrode angeordnet ist, und einen Elektrolyten, wobei der Separator der Batterieseparator nach einem der Ansprüche 1 bis 7 ist.

**Revendications**

1. Séparateur de batterie comprenant un film de base et un revêtement appliqué sur une ou deux faces du film de base, dans lequel

   le revêtement comprend : des particules de résine polymère sans fluor et des particules céramiques ;
   dans lequel les particules de résine polymère sans fluor présentent une morphologie de particule principale ou une morphologie d'agglomérat secondaire, et les particules de résine polymère sans fluor sont sous forme sphérique et dispersées à l'intérieur des particules céramiques,
   une densité de surface de revêtement $\rho_0$, une épaisseur de revêtement $h_0$, un rayon moyen r de particules de résine polymère sans fluor, un volume $V_1$ occupé par les particules de résine polymère sans fluor dans le revêtement, un nombre $N_0$ de particules de résine polymère sans fluor, une densité p de résine polymère sans fluor, et une densité de revêtement $\rho_1$ de revêtement céramique pur satisfont à la relation suivante :

   $$\frac{4\pi r^3}{3} \times \rho \times N_0 + (h_0 - V_1 \times N_0) \times \rho_1 = \rho_0$$

   $$0.8\rho_1 \leq \rho_0/h_0 \leq 1.2\rho_1;$$

   la résine polymère sans fluor présente une température de transition vitreuse de 40 °C à 100 °C et un taux de gonflement de 10 % à 200 % ;
   $N_0$ est le nombre de particules de résine polymère sans fluor comprises dans 1 m$^2$ de séparateur, qui est obtenu en comptant d'abord un nombre de particules de résine polymère sans fluor sous microscopie électronique 1K puis en convertissant le nombre compté selon la surface ;
   la densité p est mesurée en utilisant la matière première de résine polymère sans fluor ou les particules de résine polymère sans fluor qui sont séparées du revêtement puis collectées, et la densité $\rho$ est mesurée avec une balance électronique et une éprouvette graduée ;
   la densité de revêtement $\rho_1$ est obtenue en utilisant les particules céramiques, en revêtant avec un rouleau de gravure ou une tige métallique pour former un film, et en mesurant la densité de surface du film avec une balance électronique et une règle droite en acier ; et
   la densité de surface de revêtement $\rho_0$ est calculée par l'équation ci-dessus.

2. Séparateur de batterie selon la revendication 1, dans lequel la résine polymère sans fluor présente la température de transition vitreuse de 45 °C à 70 °C et le taux de gonflement de 10 % à 100 %.

3. Séparateur de batterie selon la revendication 1, dans lequel la résine polymère sans fluor est un polymère de poly(méth)acrylate.

4. Séparateur de batterie selon la revendication 1, dans lequel les particules de résine polymère sans fluor présentent une taille de particule moyenne D50 de 2 $\mu$m à 9 $\mu$m ; la taille de particule moyenne D50 des particules de résine polymère sans fluor est déterminée à partir de la matière première de résine polymère sans fluor, ou déterminée en prélevant 5 échantillons quelconques de particules de résine polymère sans fluor en utilisant un procédé de microscopie électronique, en mesurant les diamètres de ces échantillons, et en calculant la valeur moyenne.

5. Séparateur de batterie selon la revendication 1, dans lequel les particules céramiques sont au moins l'une choisie dans le groupe constitué par l'oxyde d'aluminium, la boéhmite, le titanate de baryum, l'oxyde de calcium, l'oxyde de magnésium, l'oxyde de zinc, l'oxyde de zirconium et l'oxyde de silicium.

6. Séparateur de batterie selon la revendication 5, dans lequel les particules céramiques sont la boéhmite.

7. Séparateur de batterie selon la revendication 1, dans lequel les particules céramiques présentent une taille de particule moyenne D50 de 0,1 $\mu$m à 4,0 $\mu$m ; la taille de particule moyenne D50 des particules céramiques est déterminée à partir de la matière première de céramique, ou déterminée en prélevant 5 échantillons quelconques de particules céramiques en utilisant un procédé de microscopie électronique, en mesurant les diamètres de ces échantillons, et en calculant la valeur moyenne.

8. Procédé de préparation pour séparateur de batterie, le procédé comprenant les étapes consistant à :

étape 1) disperser une poudre céramique dans de l'eau, et poncer et disperser par un broyeur à sable pour former une dispersion ;

étape 2) ajouter un liquide de résine polymère sans fluor sous forme d'émulsion à la dispersion, ajouter un liant, et passer à travers un tamis de 80 mesh à 200 mesh pour former une suspension finie ; et

étape 3) selon les exigences d'une épaisseur de revêtement souhaitée, revêtir la suspension finie sur une ou deux faces d'un film de base en utilisant un rouleau de gravure ou une tige métallique, et après que la suspension finie est appliquée sur une ou plusieurs surfaces du film de base, sécher avec un four pour obtenir un séparateur de batterie avec revêtement ;

dans lequel, à l'étape 1), une vitesse de rotation du ponçage et de la dispersion est de 500 tr/min à 1500 tr/min, et une durée du ponçage et de la dispersion est de 10 min à 60 min ; après la fin de l'étape 1), la dispersion est refroidie sous agitation à faible vitesse pour maintenir une température de la dispersion à ≤ 70 °C, dans lequel une vitesse d'agitation de l'agitation à faible vitesse est de 20 tr/min à 300 tr/min ;

la suspension finie obtenue à l'étape 2) est agitée en continu à une faible vitesse depuis la fin de la configuration jusqu'à sa mise en œuvre, de sorte que la suspension finie soit toujours en équilibre dynamique, et une vitesse de rotation de l'agitation à faible vitesse est de 10 tr/min à 800 tr/min ; du début de l'étape 2) jusqu'à ce que la suspension finie soit mise en œuvre, la suspension est maintenue à une température de 5 °C à 70 °C ; l'agitation à faible vitesse est réalisée en utilisant une cuve d'agitation avec des pales d'agitation dans les parties supérieure et inférieure, et les rayons des pales d'agitation dans les parties supérieure et inférieure ne sont pas les mêmes ;

à l'étape 3), dans le séparateur de batterie, une densité de surface de revêtement $\rho_0$, une épaisseur de revêtement $h_0$, un rayon moyen r de particules de résine polymère sans fluor, un volume $V_1$ occupé par les particules de résine polymère sans fluor dans le revêtement, un nombre $N_0$ de particules de résine polymère sans fluor, une densité p de résine polymère sans fluor, et une densité de revêtement $\rho_1$ de revêtement céramique pur satisfont à la relation suivante :

$$\frac{4\pi r^3}{3} \times \rho \times N_0 + (h_0 - V_1 \times N_0) \times \rho_1 = \rho_0$$

$$0.8\rho_1 \leq \rho_0/h_0 \leq 1.2\rho_1;$$

la résine polymère sans fluor présente une température de transition vitreuse de 40 °C à 100 °C et un taux de gonflement de 10 % à 200 % ;

$N_0$ est le nombre de particules de résine polymère sans fluor comprises dans 1 $m^2$ de séparateur, qui est obtenu en comptant d'abord un nombre de particules de résine polymère sans fluor sous microscopie électronique 1K puis en convertissant le nombre compté selon la surface ;

la densité p est mesurée en utilisant la matière première de résine polymère sans fluor ou les particules de résine polymère sans fluor qui sont séparées du revêtement puis collectées, et la densité $\rho$ est mesurée avec une balance électronique et une éprouvette graduée ;

la densité de revêtement $\rho_1$ est obtenue en utilisant les particules céramiques, en revêtant avec un rouleau de gravure ou une tige métallique pour former un film, et en mesurant la densité de surface du film avec une balance électronique et une règle droite en acier ; et

la densité de surface de revêtement $\rho_0$ est calculée par l'équation ci-dessus.

9. Procédé de préparation selon la revendication 8, dans lequel le liquide de résine polymère sans fluor sous forme d'émulsion ne subit pas de décomposition structurelle ou de déformation à pH ≥ 5 et à pH ≤ 10 ; la poudre de résine polymère sans fluor dans le liquide de résine polymère sans fluor sous forme d'émulsion présente une taille de particule moyenne D50 de 2 μm à 9 μm ;

la poudre céramique présente une taille de particule moyenne D50 de 0,4 μm à 4,0 μm ; et

les tailles de particule moyennes D50 de la poudre de résine polymère sans fluor et de la poudre céramique sont déterminées à partir de la matière première de résine polymère sans fluor ou de céramique, respectivement, ou déterminées en prélevant 5 échantillons quelconques de poudre de résine polymère sans fluor ou de poudre céramique, respectivement, en utilisant un procédé de microscopie électronique, en mesurant les diamètres de ces échantillons, et en calculant la valeur moyenne.

10. Procédé de préparation selon la revendication 8, dans lequel, sur la base du poids total de la suspension finie, la poudre de résine polymère sans fluor représente 0,5 % en poids à 10 % en poids, et la poudre céramique représente 15 % en poids à 40 % en poids.

11. Procédé de préparation selon la revendication 10, dans lequel, sur la base du poids total de la suspension finie, la poudre de résine polymère sans fluor représente 5 % en poids à 10 % en poids ; et la poudre céramique représente 20 % en poids à 35 % en poids.

12. Procédé de préparation selon la revendication 8, dans lequel, lors du revêtement de l'étape 3), un revêtement à grande vitesse est utilisé, et une vitesse du revêtement à grande vitesse est de 50 m/min à 250 m/min ; et une température du séchage est de 50 °C à 100 °C, et une durée du séchage est $\geq$ 5 s.

13. Procédé de préparation selon la revendication 12, dans lequel la température du séchage est de 60 °C à 90 °C.

14. Batterie comprenant : une électrode positive, une électrode négative, un séparateur disposé entre l'électrode positive et l'électrode négative, et un électrolyte, dans laquelle le séparateur est le séparateur de batterie selon l'une quelconque des revendications 1 à 7.

FIG. 1

FIG. 2

**EP 4 507 107 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014377630 A1
- CN 107895766 A
- CN 115117559 A